# EUROPEAN PATENT APPLICATION

(11) **EP 2 009 919 A1**
(43) Date of publication of application: **31.12.2008**
(21) Application number: 07290831.2
(22) Date of filing: 29.06.2007
(51) Int. Cl.: H04N 7/16

(54) **Method and system for management of multimedia data**

(71) Applicant: Axalto S.A., 92190 Meudon (FR)
(72) Inventor: Balsan, Gilles, 92340 Bourg-La-Reine (FR)
(74) Representative: Jacquot, Ludovic R. G.

(57) **Abstract**

The invention relates to a method and a device for management of multimedia data. More particularly, the invention relates to a method and a device to allow an end-user to manage and keep with him his personal multimedia video and music Library.

This method is based on a purchase of multimedia content step made using a first portable device of the end-user (10, 20, 30), and a multimedia content playing step on a distinct second device (70) used for displaying the multimedia content (40), this distinct second device (70) being a portable communication device.

## Description

The invention relates to a method and a device for management of multimedia data. More particularly, the invention relates to a method and a device to allow an end-user to manage and keep with him his personal multimedia video and music Library, even when travelling.

Indeed, there is a need for travellers, mobile people to be able to listen /view their preferred multimedia content, whatever the place they are in.

Mobile multimedia content readers such as smartphone, mp3 readers, and mp4 readers are available today.

Currently, as a matter of an example, there is already an on-line service available for iTunes (as exposed on http://www.apple.com/chfr/itunes) but for a unique handset so non-smartphone interoperable, and for multimedia local usage with the smartphone.

Nevertheless, the end-user has Lu deal with small MMI (Man to Machine Interface) and cannot use as example the TV available in the hotel room he just booked, in order to watch a movie he bought on his mobile smartphone.

Today "pay per view" offers are available as example. Such solutions provide a way to buy online multimedia content in order to watch it. They are based on wired and xDSL technologies (Digital Subscriber Line) with a need of a personal computer or a dedicated set-top-box, and the existing services are broadcasted services, not services based on some local storage.

So there is a need for the end-user of being able to play multimedia content with a mobile solution, while enhancing end-user experience concerning multimedia usage and mobility constraints.

It is thus desirable to provide a mobile and user friendly way for end-users to watch/listen to their content. This purpose is achieved by way of the invention as recited in the appended claims.

In the presently described method the end-user uses multimedia data that are compatible with any smart reader and a High Fidelity and TV compatible plugged box in order to be able to play the multimedia items he/she legally asked for previously.

Other purposes, benefits and aspects of the invention will appear through the following description, which is made in reference to the appended figures, among which:
- figure 1 represents the main blocks of one embodiment of the invention,
- Figure 2 is a flowchart showing a sequence of steps, implemented in the same embodiment as figure 1, when the end-user orders a multimedia content he wants to watch and/or listen to, and
- Figure 3 is a flowchart showing a sequence of steps, according to one embodiment ot the invention, when the end-user plays a multimedia content he previously paid for, on a local available multimedia displayer.

Without any physical action from the end-user, due to one embodiment of the disclosed invention, he can play the multimedia content he previously paid for without the need to take any multimedia content support such as CD (compact disk), DVD (Digital Versatile Disc or Digital Video Disc), HD DVD (High-Definition DVD) or dongle with him.

The multimedia content can be one of the standardized multimedia content in any dedicated standards such as Mp3, jpeg, Mp4, but the content does not appear to the end-user as such when managing end-user's rights and so as to ease end-user experience. The multimedia content can also be managed by the system internally using a proprietary format.

The presently described embodiment is a complete On-Line Portable Multimedia Library service. It is made mainly of three parts in order to be able to offer such a dedicated service to the end-user.

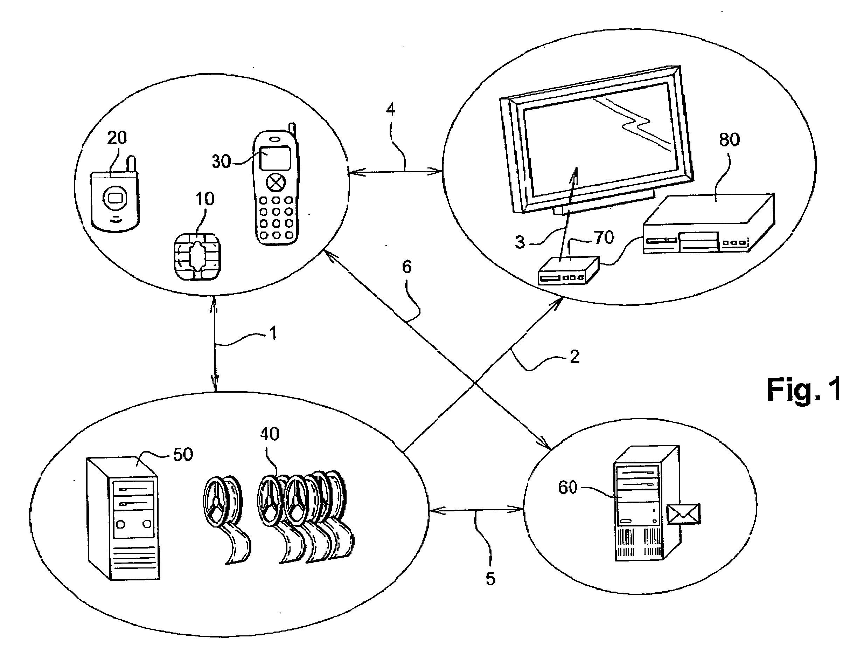

As a first part, the system as disclosed on figure 1 includes a content server 50 with associated multimedia content library 40, the multimedia content being as example any video, photo, voice, or song. As a second part, the system also includes a portable personal device, preferably a mobile phone 30, 20. This mobile phone, being in a preferred embodiment a smartphone, is preferably associated to a personal device such as a smart token 10. The smartphone is usually equipped with a screen, but it can be any visualisation mean such as a tactile screen, a more classical phosphorescent surface on which an image is displayed, as on a television, computer monitor, or mobile handset.

The third part of the system is a multimedia content displayer 80, including a TV screen and an audio/video amplifier associated with a dedicated multimedia interface box 70 linked to the said multimedia content displayer 80. This multimedia interface box 70 is a portable communication device. We call hereafter a portable device a system of conformation and of association as example using a physical link, allowing repetitive manual transport and association of the said device to successive systems, such systems being possibly different for every successive usage of the device. Such a portable device may also be called a traveling device or a personally transportable device.

It is associated one way to the content server 50 through wired or wireless long distance link. It is also associated wired or wirelessly to the multimedia content displayer 80, including here a local High Fidelity and TV 80. This second association is aimed at playing the end-user owned content which is stored in the multimedia interface as would do a DVD player for example. The multimedia interface box 70 does not need to be plugged to the available multimedia content player 80 before multimedia content will be sent to it, using a broadcast channel in a preferred embodiment. As such, the multimedia interface box 70 can be left permanently available near the multimedia content player 80 or it can be part of the traveling end-user material as well, without preventing any download of a content onto such interface box 70.

An additional online authentication server 60 manages end-user's authentication. This server can be a dedicated server or be a part of the multimedia content server 50 as well.

As disclosed in figure 1, the above three parts are interacting together.

The functional links between those entities are in one preferred embodiment based on several protocols: a radio telecommunication network 1 between the personal and portable device of the end-user 10, 20, 30 and the multimedia content server 50, the same kind of wireless radio telecommunication network 6 between the personal device 10,20,30 and the online authentication server 60, and a local High Speed Protocol 3 between the multimedia interface box 70 and the multimedia content displayer 80, a Wireless USB (Universal Serial Bus) link, and a WiMax remote link 2 between multimedia content server 50 and multimedia interface box 70.

A wireless link 4 exists as well in one preferred embodiment of the invention between the personal device 10, 20, 30 and the multimedia interface box 70. It's a local command link using any protocol like as sample IrDA (Infrared Digital Access), Bluetooth.

In case the online authentication server GO is physically different from the multimedia content server 50, it is linked via a wireless radio telecommunication network with the personal token 10 associated to the mobile phone 20, 30 and using classical internet secured connections 5 to the multimedia content manager server 50 for some authorization messages exchanges.

This service aims at:
- Allowing end-user who subscribed to such a service to view/listen anywhere on highest in class terminals High Fidelity / TV Set their owned multimedia items,
- Managing only files without heavy streaming constraints,
- Replacing Subscriber's legacy CD/DVD Audio/Video reading devices,
- Totally suppress the need for any owned multimedia storage item such as DVD,
- Allowing multimedia vendor to organize push offer campaigns,
- Allowing end-user to manage his multimedia library anywhere in pull mode.

The personal token 10 included preferably in such a solution can be a subscriber identity module for a mobile telephony service, and can be referenced for example as an UICC card, SIM, USIM, ISIM, RUIM, Mega SIM, or smart card.

The mobile handheld terminal 20 or 30 is as example a 2G or 3G mobile equipment, a PDA, a Windows CE handheld device.

The Wireless High Speed protocol Link 2 is preferably one of WiMax 802.16m, WiBro, WiFi 802.11n, but it can be any wireless high speed protocol. During Wireless HSP roll-out in given areas a back-up wired legacy xDSL or FTTH (Fiber To The Home) link can enable the system initial purpose when the wireless infrastructure is not yet available.

The local link 4 can be as example S-Video, or any wired legacy multimedia standard interface, Ultra Wide Dand or HDMI (High-Definition Multimedia Interface) or any other compatible local wireless Link.

The present embodiment comprises a dedicated Java application to provide an automatic management of the end-user's credentials, and to automatically order the multimedia content transfer to the interface box 70 once the authorisation is validated by the authorisation server 60.

According to one aspect of the invention, this application is an applet stored in the personal token 10.

In a preferred embodiment, this application stored in the personal token 10 manages end-user credentials such as name, personal identification number, credit card number, expiration date, ..., displays all the necessary information such as dedicated menus allowing the end-user to access to features like item purchase, library lists of owned or purchasable items on the screen of the end-user mobile device 20 or 30.

Concerning the end-user credentials, such personal information are stored in the preferred embodiment in the personal token 10 but can as well be entered by the end-usew as a password or even stored in the memory of the terminal 20, 30.

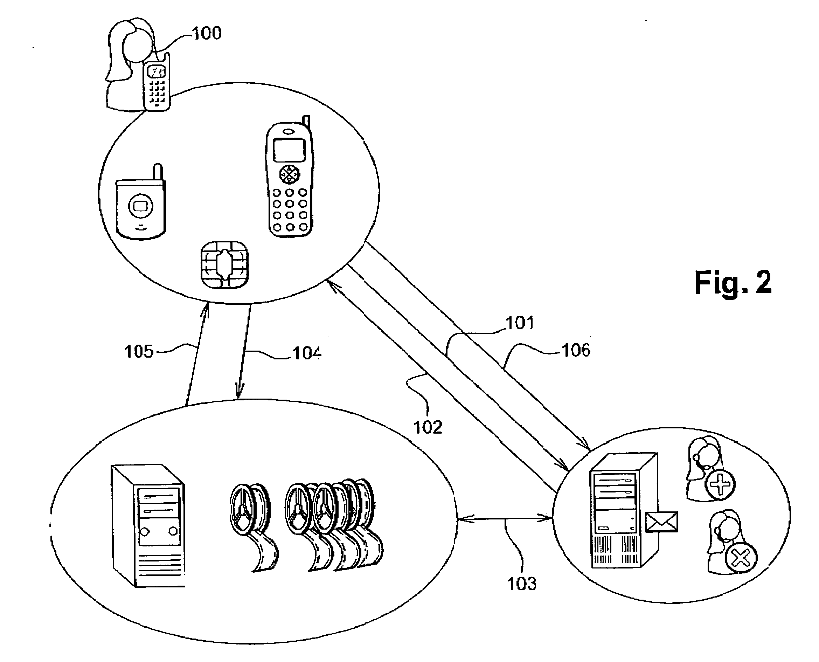

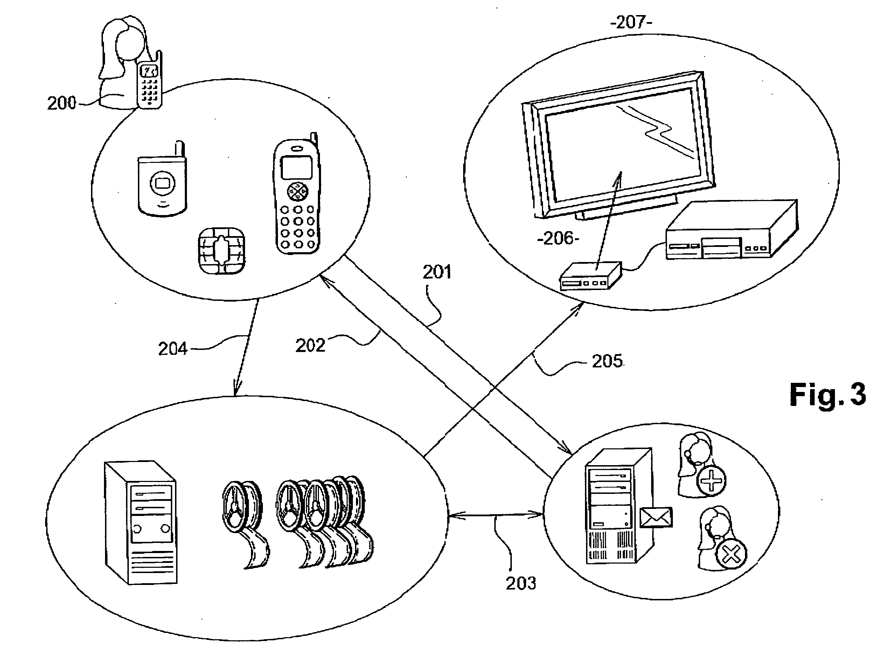

In one embodiment, referring to figures 2 and 3, in order to get more in details, a detailed implementation can be based on the usage of SIM toolkit standardized commands for the said dedicated application.

There are several ways by which the said application can manage the service for the end-user using ergonomic dedicated menus: via a web browser or equivalent, using a smart card web server, using SMS exchanges with the server 50 and 60....

Another step can be added, like Internet web portal service usage in order to preview part of the multimedia content before buying or renting it.

These different additional steps include, but are not limited to, usage of usual man to machine interface as used onto mobile terminal screen and keyboard. They can be as well based on bitmap or icons usage, tactile screen, or even audio messages for blind people as example.

Hereafter, an embodiment of the invention will be described wherein the end-user is receiving standardized text SMS using personal portable device comprising a mobile terminal and a personal token in a mobile radiocommunication network such as GSM or 3G telecommunication network.

The above described application is stored on the personal token, in a dedicated memory such as a flash memory or EEPROM memory. The application can be installed into the memory of the card during personalization step, before putting it onto the market or installed using Over the Air (OTA) infrastructure. This application can be stored into the memory of the mobile terminal in another embodiment.

However, those skilled in the art should recognize that the method is applicable to other types of communication sessions between two devices operable either on the same network or different networks.

A first step, the purchase of multimedia content by the end-user is depicted on figure 2:

In the preferred embodiment, the end-user uses his personal token 10 through the dedicated application, in order to select and purchase (or rent) a new multimedia content. This can be done using as example SMS (short message service) exchanges or a web server interface and a dedicated VPN (virtual private network) wireless connection established on top of a standardized wireless protocol such as GSM (Global System for Mobile communication), GPRS (General Packet Radio Service), UMTS (Universal Mobile Telecommunications Service), or the like.

As shown on figure 1, the end-user's personal token 10, being in this example a Subscriber Entertainment Module as well, contains a Library Management dedicated Application and a corresponding list of owned multimedia files, plus the usual mobile network telecommunication user personalization data. The end-user can play and enrich his personal Multimedia Library from any remote smartphone he may have in hand, the preferred one being his own smartphone hosting his library management dedicated application.

The smartphones 20, 30 are any mobile terminals connected to mobile telecommunication standardised network and allow emission and reception of data such as Short Messages Services (SMS) that can carry either text or binary data. Such data messages are directed to the personal token 10.

This dedicated application allows the end-user to manage his multimedia Library by comprehensive menus.

As described hereafter, the dedicated application is also used in a later step to command to play the owned Multimedia items when the mobile terminal will be used as a home remote control for the interface box 70.

An enrolment to the service is made before, using over the air data exchanges or when the end-user visits a point of sale offering such service.

The end-user first sends a customer authentication request 101 to the authentication server 60, using a dedicated item in the menu.

Such a customer authentication request includes at least the subscriber identification for the service and is built using the dedicated credentials related to this end-user such as name, secret id number, credit card number, password that are stored in the personal token 10.

After some checks internally made in order to make sure the credentials are correct meaning that the end-user is the one he pretends to be, and he's allowed to authenticate to such service at the given moment, the authentication server 60 sends as a reply to the end-user mobile device 10, 20, 30, the customer authentication authorization 102.

An optional link between the two servers 50 and 60 can exist or those two servers can be in the same premises, with internal dedicated connection. In such case, the authentication server 50 can directly inform the content server 50, sending a dedicated message indicating customer authorization 103.

If no authorization is delivered to the end-user, the process is stopped.

Once those steps are successfully done, the end-user can send to the content server 50 a title purchase request 104.

The multimedia content server 50 then sends a title purchase acknowledgement 105 to the end-user 100 using the personal token 10 and the associated smartphone 20 or 30.

In this message all the necessary information data are included and then stored into the personal token 10.

Those data are at least made of the end-user identity, the title identity and the associated rights, and some technical system parameters related to the item. Such rights could be as example number of times the end-user is allowed to play this multimedia content, duration of time during which the end-user is allowed to play such a multimedia content, and the number of times the user can share this content with peer.

Then the personal device of the end-user, made of the personal token 10 and the associated smartphone 20 or 30 sends to the authentication server 60 the end-user title purchase registration 106 (this could be done through link 5).

Once these first steps are performed, i.e. the purchase (or the renting) of multimedia content by the end-user done, the end-user 100 can download his multimedia content as described in figure 3.

The end-user first sends a customer authentication request 201 to the authentication server 60, using the dedicated menu item of his smartphone 20 or 30. This customer authentication request is made of the dedicated credentials related to this end-user such as name, secret id number, credit card number, password stored into the personal token 10 in the preferred embodiment or even multiform factor strong authentication (such as biometrics, ...).

After some checks internally made in order to make sure the credentials are corrects and the end-user is the one he pretends to be, and he's allowed to authenticate to such service, the authentication server 60 sends as a reply to the end-user mobile device 10, 20, 30, the customer authentication authorization 202, in order to safely sign the usage authorization of multimedia data files in the back end protected system.

An optional link 5 between the two servers 50 and 60 can exist or those two servers can be in the same premises, with internal dedicated connection. In such case, the authentication server 50 can directly inform the multimedia content manager server 50, sending a dedicated message about customer authentication authorization 203.

If no authorization is delivered to the end-user, the process is stopped.

The end user 200 then is suggested to go to the enrolment and then purchase title choice steps of the offer.

Once those steps are successfully done, the end-user can send to the multimedia content manager server 50 a title play request 204.

The multimedia content manager server 50 then sends the title content 205 to the multimedia interface box 70.

This can be made using WiMax protocols or any broadcast protocol such as WiFi, or a possible substitute protocol of the wired type such as xDSL, FTTH (Fiber To The Home) as the interface box is preferably enabled also for such protocol.

With this sending, a set of setting data are included and then stored into the multimedia interface box 70.

In one embodiment, the multimedia data can be totally stored into the multimedia interface box 70 before the end user is able to watch the program, for example shortly after the end-user orders the multimedia content. This embodiment is very valuable for the end-user, as it allows him to order the download of the data while he is still not available for watching for example while he is in the transportations on his way home. The downloading operation thereby occurs during the transportation time of the end-user, avoiding any waiting time for the end-user. The data being fully downloaded inside his interface box 70 when he gets home, he can enjoy his watching session without delay. As the interface box 70 is portable and wirelessly connected, this embodiment can also be implemented while the end-user is traveling, the downloading step onto the interface box 70 then occurring while his interface box is in his luggage or at the hotel room.

In another embodiment, the data can be displayed immediately by the displayer 80 as they arrive onto the interface box 70 or they can be displayed with a small time lag after arrival onto the interface box 70, while the watching and the download are both under process.

Those data are managed internally by the system and not made visible as such to the end-user.

As mentioned above, the multimedia data can be completed by some rights associated data like number of times the end-user is allowed to play this multimedia content, or duration of time during which the end-user is allowed to play such a multimedia content. Those data can be encrypted as well in order to enhance security.

Such multimedia data are originally stored in the multimedia content library 40 associated to the multimedia content server 50.

An optional DRM (digital right management) module can be present in the multimedia content server 50 as well, to perform on the fly conditional access service rights management.

Before the multimedia data transfer from the content server 50 to the interface box 70, the end-user must actuate wireless connection of the interface box 70 unless the connection was automated when both ends were wireless. Here the box 70 connects the end-user's displayer 80, a multimedia High Fidelity terminal and a TV set (available where the end-user 200 is at that time) by a Remote Wireless High Speed protocol Link 2 to the multimedia content server 50 on one end and through a local Link 4, to the end-user's portable device made of a personal token 10 and of a smartphone 20 or 30.

The end-user 200 can then play 206 the multimedia content on the available multimedia displayer 80, using his personal device 10,20,30 as the remote control for the interface box 70, ad though the interface box was a DVD player and the personal device 10,20,30 of the end-user was the remote control of the DVD player.

Advantageously, the implementation of this invention is based on WiMax for the link 2 between the content server 50 and the interface box 70.

The end-user orders the multimedia content from his mobile handset and initiates the download of the multimedia content onto the interface box 70, which may be remote from the mobile handset, i.e. at home, or which may be in the end-user's luggage.

This approach allows realising the download while the end-user is still not at home, thereby saving the necessary time for download.

The interface box 70 may be already in place in association with the displaying device 80 for example at home while the data are downloaded. In this scheme, this downloading time occurs while the end-user is on his way home or more generally dedicates his time to other tasks than waiting for the download. This scheme also allows a complete download before starting the displaying stop.

This approach has its own autonomous benefits independently of the set up box being portable or not.

According to some embodiments of the method, all the exchanges can be displayed to the end-user or, in a preferred embodiment, only relevant messages such as title choice are displayed to the end-user

The dedicated application (not shown) is preferably stored on the subscriber identity module 10, more specifically in the subscriber identity module memory.

According to one embodiment, the subscriber identity module can also be a piece of software, the dedicated said application being in this case also a piece of software.

According to one other embodiment, a dedicated SIM toolkit application is stored and executed in the subscriber identity module memory for implementing the ordering and choice of content to be downloaded, and the display of content is made using the MMI (Man Machine Interface) of the mobile terminal. Such an application may be an applet, or more specifically a cardlet, when implemented on a Java^{™} card type of subscriber identity module. Hereafter, this application will be referred to as an agent application. Although the invention is described with the SMS messages being implemented as described in ETSI standards, it is not to be construed as being limited to such. For example, although not ideal, the message may be sent to the personal token via another channel between the mobile terminal and the subscriber identity module such a BIP (Bearer Independent Protocol).

As another example, although the mobile terminal 20, 30 and the personal token 10 are shown and described to be linked devices, they should not be construed to be limited as such. They can be as example two separate devices communicating using contactless channels such as infrared IrDA or ISO 14443.

Accordingly, the mobile terminal 20,30 and the personal token 10 operate on networks including a public switched telephone network (PSTN), a mobile communication network, an Internet protocol (IP) network, etc. The communication session may be a voice or a data communication session. Examples of a data communication session include, but are not limited to, audio streaming, video streaming, video conferencing, Voice Over IP (VOIP) etc.

The disclosed invention allows having a very easy to use and convenient way to play multimedia content on the most appropriate player without the need to buy a new version of the multimedia content.

The above described embodiment of the invention can be implemented on any mobile phone available on the market, with the same end-user experience duc to the fact that the application is preferably implemented inside the personal token associated with any mobile terminal.

The above described embodiment is basically well adapted to video content but it can also be applied to other kinds of multimedia data such as music, photos, or any kind of multimedia data.

The above described embodiment implements a kind of multimedia on-line buffer arrangement, in-between a streaming VOD offer and a static only multimedia content offer.

This invention allows a particularly high mobility.

Indeed, the Java Applet used in the personal device 10, 20, 30 of the end-user allows to manage one's multimedia Library anywhere and the Multimedia Interface Box 70, as being a portable device as well, allows to viewing and /or listening one's multimedia owned items from everywhere.

The user can use his library management application from everywhere simply by use of a dedicated menu on his personal device. Connecting the Interface Box 70 in hotels rooms, in relatives or friend's accommodation, allows viewing and/or listening the multimedia chosen items.

Individual Record of owned multimedia Items are preferably kept: The content server 50, 40 keeps trace of the list of any subscriber's property in a dedicated database for personal records.

The Command for the Purchase and the command for the Play of the multimedia items are drove both from the personal portable device 10, 20, 30 of the and-user using a simple menu, appearing as though using a remote control device.

The portable interface box 70 can be moved everywhere easily while traveling so as to allow viewing or listening content items, before the box 70 ideally could be associated with most available devices (High Fidelity and TV).

## Claims

1. A method for management of multimedia content (40) associated to an end-user, said method comprising:
- an ordering step of multimedia content made using a first communication device of the end user (10, 20, 30), said first communication device being a portable device, and
- in response to the ordering step, a multimedia content transmission step directed to a second communication device (70) which is distinct from the first communication device,
**characterized in that** the second communication device (70) is a portable device.

2. The method according to claim 1, **characterized in that** the second portable communication device (70) is enabled tor a wireless multimedia content transmission from a remote server (50) .

3. The method according to claim 2, **characterized in that** the second portable communication device (70) is a WiMax receiver.

4. The method according to anyone ot the preceding claims, **characterized in that** the distinct second portable communication device (70) is brought from a non associated state into an associated state with a multimedia displayer (80) at a moment between the ordering step and the multimedia content playing step.

5. The method according to anyone of the preceding claims, **characterized in that** the multimedia content transmission step comprises :
• A first step of end-user request for multimedia content display, initiating :
• A step of verification of credentials stored in the portable device of the end-user (10, 20, 30),
• A step of multimedia content (40) transmission from a server (50) to the distinct second portable device (70).

6. The method according to the preceding claims, **characterized in that** the first portable device of the end-user (10, 20, 30) is a mobile phone enabled for being used as a remote control for a system made of a multimedia displayer (80) and the second portable communication device (70), and the first step of end-user request for multimedia content display comprises actuating the mobile phone as a remote control.

7. The method according to claim 5 or 6, **characterized in that** the first portable device (10, 20, 30) comprises a mobile telephony terminal (30, 20) and a personal token (10), the personal token storing credentials allowing the multimedia content (10) transmission.

8. The method according to anyone of the preceding claims, **characterized in that** it comprises the step which consists in storing the multimedia content (40) in the second portable communication device (70).

9. The method according to anyone of the preceding claims, **characterized in that** the multimedia content (40) is a video program and the transmission step includes the complete storing of the video program into the second portable communication device (70).

10. The method according to the preceding claim, **characterized in that** the second portable communication device (70) is able to store the complete multimedia content (40) before the playing step is started.

11. A multimedia content management system comprising:
• a first communication device of the end-user (10, 20, 30) for multimedia content ordering, which first communication device is a portable device and,
• a second communication device (70) which is distinct from the first communication device, said second communication device being used for receiving the multimedia content (40) in response to the ordering step,
**characterized in that** the second communication device (70) is a portable device.

12. A multimedia content management system according to the preceding claim, **characterized in that** the first portable device (10, 20, 30) comprises a mobile telephony terminal (30, 20) and a personal token (10).

13. A multimedia content management system comprising a multimedia content server (50) and a second communication device (70) being used for displaying a multimedia content (40), the server comprising:
• Software for acquiring an order for a multimedia content from a first communication device of an end-user (10, 20, 30), which first communication device is distinct from the second communication device and is a portable device, and,
• Software for initiating transmission of the multimedia content (40) onto the second communication device (70),
**characterized in that** the second communication device (70) is a portable device.
